Europäisches Patentamt

European Patent Office

Office européen des brevets

(19)

(11) Publication number: **0 283 528 B1**

(12) # EUROPEAN PATENT SPECIFICATION

(45) Date of publication of patent specification: **02.01.92**

(51) Int. Cl.⁵: **F25B 29/00**, F25C 1/00, C02F 1/22

(21) Application number: **87104194.3**

(22) Date of filing: **21.03.87**

(54) An ice maker heat pump using water supercooling.

(43) Date of publication of application:
**28.09.88 Bulletin 88/39**

(45) Publication of the grant of the patent:
**02.01.92 Bulletin 92/01**

(84) Designated Contracting States:
**AT CH DE FR GB IT LI SE**

(56) References cited:
**EP-A- 0 067 799**     **EP-A- 0 168 537**
**GB-A- 2 155 607**     **US-A- 4 253 309**
**US-A- 4 401 449**     **US-A- 4 509 344**
**US-A- 4 671 077**

(73) Proprietor: **Paradis, Marc A.**
**3310 de la Monnerie**
**Ste Foy(CA)**

(72) Inventor: **Paradis, Marc A.**
**3310 de la Monnerie**
**Ste Foy(CA)**

(74) Representative: **Patentanwälte Wenzel & Kalkoff**
**Flasskuhle 6 Postfach 2448**
**W-5810 Witten(DE)**

# Description

The invention refers to a method for extracting heat from cold water by feeding cold water continuously to a heat pump provided with a cold side heat exchanger CSHE in which heat is extracted from cold water and a hot side heat exchanger HSHE in which said extracted heat is used or disposed off.

A heat pump system is a machine capable of extracting energy from a source at a certain temperature and transferring it to a sink at higher temperatures. It thus can be said that the machine has a "cold side" and a "hot side".

Different types of heat pump systems exist: Absorption heat pumps, chemical heat pumps, thermoelectric heat pumps, electrical heat pumps, vapor compression heat pumps, etc. All these machines need a heat source from which energy can be extracted. That source can be any medium: air, water, grounds, etc. The heat sink of the machine can also be any medium.

If the purpose for using the heat pump system is to cool a medium, the machine is usually called a refrigeration or a conditioning system. If instead, heating a medium is desired, the machine is simply called a heat pump. It can be noted that the same machine can also have two functions, like cooling the air in a house (cold side) while at the same time heating a swimming pool (hot side) with the heat extracted from the house.

In the particular case where the heat source for the machine is water, the reason for using the heat pump can be to obtain cold water for conditioning purposes; it can also be to fabricate ice, which has a large number of uses. Since that phase change (liquid to solid) liberates a large quantity of energy (335 kJ/kg), it can also be regarded as a very large source of heat for the cold side of the heat pump. This effect is for instance used in a heat pump arrangement disclosed in the United States Patent 4,253,309. Compared to a pure change of temperature of the water the accumulation capacity can be increased by about one hundred per cent without using bigger equipment.

The heat which is produced on the hot side can be used for different purposes like space heating. A heat pump system, capable of fabricating ice is usually called an Ice Maker Heat Pump (IMHP).

An ice maker heat pump is basically a heat pump unit that extracts energy from water by freezing the liquid to ice. One example of this concept is the Annual Cycle energy System (ACES) in which ice, fabricated during winter as a source of energy for heating a building is used for air-conditioning purposes in summer. Another possibility is the fabrication of ice at night (i. e. during off-peak hours), for air-conditioning purposes in day time.

A large number of references exist on the subject of the IMHP, and the problems associated with the use are well known, see e.g. "Ice Maker Heat Pump Systems: Review Of Current Technology" SED Systems Ltd. Suskatone, Canada, 1978, doc. No. 088400-TR-101; contract for NRC Building Research Division. Indeed, the IMHP technology has not changed much during the last 30 years. The three basic types, distinguished by the type of low side heat exchanger arrangement used, are still:

1. the coil (or plate) in bin arrangement, direct heat exchanger type
2. the coil (or plate) in bin arrangement, indirect heat exchange type
3. the plate above bin system, for which periodic ice harvesting is necessary.

One of the latest examples of the first type is described in detail in "An Ice Making Show Case", Reardon J. G. et al, ASHRAE Journal, May 1985, pp. 24 - 29.

In that application the IMHP has cut the electrical demand for summer cooling in a building by more than 50 %.

For different reasons, the three types of existing IMHPs still have a relatively low average coefficient of performance, the two first ones mainly because of heat transfer problems, the latter mainly because of the inherent problems associated with ice harvesting. They all are costly to build and can only be justified economically for large applications.

The use of water supercooling will permit better performance and lower costs. Relatively little experimental work has been done on the phenomenon of water supercooling, although it has been known to exist for a long time. In a book entitled "Properties of Ordinary Water-Substance" (Hafner Publ. Co., Now York 1968), N.E. Dorsey defines the phenomenon the following way: "Under suitable conditions , water can be cooled below its so-called freezing point (the melting point of ice) without becoming solidified. In that state, it is said to be supercooled. If a bit of ice, no matter how minute, be touched to supercooled water, freezing on the surface of the ice begins at once, and proceeds rapidly until enough latent heat has been freed to raise the temperature to the so-called freezing point. It then stops unless heat is being abstracted from the mixture." . In the same book (p. 640)-,Dorsey makes a reference to an article by A. Mousson where it is said that certain conditions appeared to favour water supercooling; one of these conditions is that water is inside narrow capillary tubes.

Two important publications on the subject of supercooling of water inside circular tubes are the following: one by Arora A.P.S. et al. entitled "An investigation of the freezing of supercooled liquid in forced turbulent flow inside circular tubes", (Int. J. Heat Mass Tr.,Vol. 16, pp. 2077-2085, Nov. 1973) and another one by Mukushi T. et al. entitled "Supercooling of liquids in forced flow in pipes and the growth of ice crystals". (Hitachi Research Laboratory , Hitachi Ltd. Scripta Publishing Co., 1982).

A further slush ice maker is known from the United States Patent 4,401,449. In the chiller tube of a refrigeration machine a change of state of water is allowed which can lead to a blockage of the conduit if the flow is interrupted by too many ice crystals which develop during the change of state. In order to prevent a blockage a very high pressure of about 2 to 4 atmospheres and a certain velocity of flow is necessary. Accordingly, the equipment necessary for obtaining a steady flow of slush ice is considerable.

It is an object of this invention to provide a heat pump system of the initially described type which can be used for any purpose such as heating of a medium, cooling of a medium, fabrication of ice, desalination of water, etc., and which employs the phenomenon of water supercooling continuously. There is no limitation as to the purity of the water used.

To fulfil this object the invention proposes the features:

- supercooling the cold water to temperatures below 0°C on a continuous basis in the CSHE by passing the cold water through at least one tube of the CSHE having such a small internal diameter as compared to its length that it is capable of supercooling water passing therethrough, thereby allowing maximum heat extraction from the cold water,
- bringing the supercooled water in a quasi-stable liquid state within the CSHE through proper conduit means from the CSHE to a reservoir and subjecting it to a change of state when it leaves the conduit means, thereby generating a mixture of ice crystals and water in the reservoir.

The proposed heat pump system according to the invention uses water as a low side heat source. The main feature of the new heat pump system is its capacity to extract heat from said liquid water even when the temperature of the water is as low as 0°C while the water leaving the low side heat exchanger remains in a liquid state at temperatures well below 0°C, i. e. in a supercooled state. Normally unstable, that state can be rendered quasi-stable by proper heat exchanger design. If that water is sent to some sort of reservoir, the contact with any part of that reservoir will change the state of the outcoming water and separation into a solid part and a liquid part will occur until the mixture is back at 0°C . This corresponds to about 1,25 % of solid particles per degree Celsius of supercooling. The number of degrees of supercooling is controlled by the characteristics of the heat exchanger. Temperatures of - 5°C have been obtained in the inventor's laboratory , but calculations tend to show that much lower temperatures are possible at the exit of the low side heat exchanger.

The structure of the resulting ice is that of fine separate crystals. That ice is in "slush" form which will float at the reservoir water surface. If needed, the resulting liquid-ice mixture can then be circulated in a properly designed pump and piping system.

Instead of being sent to a reservoir, the outcoming water can be sent through a fine mesh screen: the ice crystals will still be formed and accumulate in the screen while the liquid part will go through the mesh. In that way, liquid and solid can easily be separated.

Because of its capacity to fabricate ice, that new heat pump will be called, like those of more conventional types, an IMHP. Its main advantages over the existing IHMPs are:

- the cold side heat exchanger does not have to be located inside of a reservoir, like in the types initially mentioned above
- the cold side heat exchanger does not have to be located above a reservoir, like in the lastly mentioned type,
- water destined to the cold side heat exchanger, arriving at a temperature of 0°C or above, can be circulated with an ordinary circulating pump
- the cold side heat exchanger is as simple or simpler to manufacture than standard heat exchangers
- the ice is formed on a continuous basis and the heat pump cycle never has to be stopped for harvesting. Indeed, there is a continuous harvesting of the ice
- since no ice is formed inside or on the surface of the heat exchanger itself, the heat exchange is more efficient and the machine performance is higher than that of other IMHPSs,
- ice is fabricated in the form of small ice crystals.

The last advantage is very significant. Other IMHPs fabricate small or large blocks of ice. The small crystals fabricated with the new invention are of pure solid water even when made from polluted or salted liquid water. This fact opens up many possibilities , as will be described later.

Moreover, when warm water has to be cooled, like in air-conditioning "chiller" systems, the process is more efficient if the new invention is used. Indeed, with the new invention, the warm water only has to be fed at the top of a reservoir, containing a mixture of liquid water and ice crystals. Liquid water at 0°C can then be pumped out from the bottom of the reservoir.

Another advantage of ice in small crystals form is its smoothness to the touch. This makes is more suitable for may applications as will be described later.

Like with other IMHPs, the rate of formation of the ice can be modulated at will, by using any of the usual methods of capacity modulation.

Preferred embodiments of the present invention will now be described and schematic drawings presented. It will be assumed here for the sake of simplicity that the type of heat pump used is the more common vapor compression system, featuring four basic components (a compressor, a condenser, an expansion device and and evaporator) and a certain number of other components depending on the specific application.

Figure 1    is a schematic diagram of an air conditioning system with ice storage based on the present invention;

Figure 2    is a schematic diagram according to figure 1 having an additional heat exchanger between the condenser and the expansion device;

Figure 3    is a schematic diagram of a solar assisted ice-maker heat pump, also based on the present invention;

Figure 4    is a simplified and partly sectioned view of one form of an evaporator for supercooling water;

Figure 5    is another simplified partly sectioned view of another evaporator constructed in accordance with the present invention;

Figue 6     is a cross-section of a centrifugal ice separator; and

Figure 7    is a section view taken along section lines A - A of figure 6

1. Air conditioning systems with ice storage

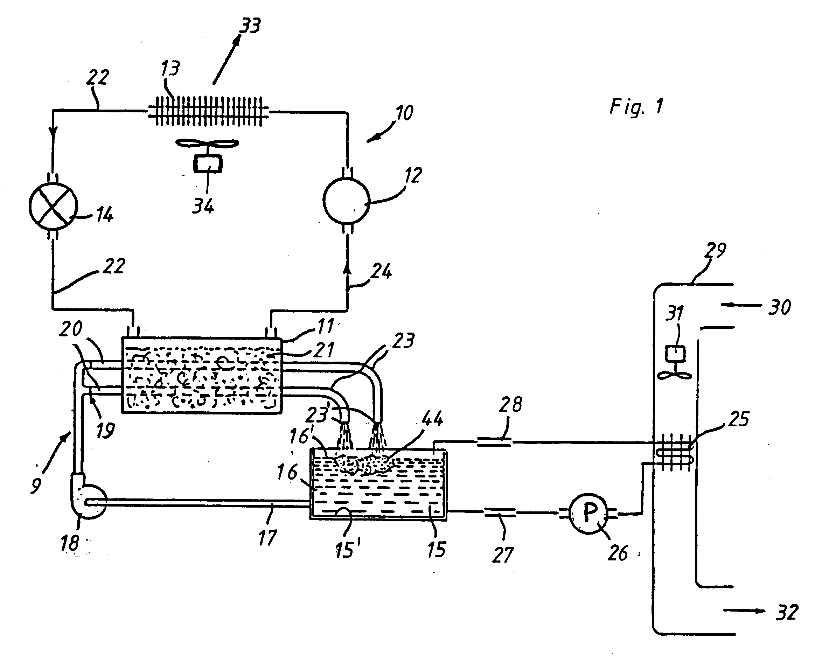

Referring to figure 1 there is shown a schematic diagram of one of the systems covered by the present invention as utilized with a mechanical vapor compression heat pump device. The heat pump is used as part of an air-conditioning system and is schematically illustrated by the heat exchange circuit 10 comprising an evaporator 11 , a compressor 12, a condenser 13 and an expansion device 14. As herein shown, the evaporator 11 is constructed in accordance with the present invention and is connected to a water supply circuit 9 having a reservoir 15, containing a volume of water 16 therein. An outlet conduit 17 is connected adjacent to the bottom wall 15′ of the reservoir 15 and connects to a pump 18 which pumps the water from the bottom of the reservoir to an inlet 19 of evaporator conduit means, herein constituted by one or more straight conduits 20 extending through the evaporator 11 and in direct contact with liquified refrigerant 21 therein, through the walls of the tubes 20. Accordingly, the refrigerant evaporates and then flows through the circuit conduit 24 of the heat exchange circuit 10, towards the compressor 12.

The refrigerant in circuit 10 can be any of the pure substances (halocarbons or others) usually used in the refrigeration industry (like R-12, dichlorodifluoromethane), azeotropic mixtures of those pure substances, (like R-502, which is a mixture of R-22 and R-115) and also non-azeotropic mixtures of those pure substances or of those azeotropic mixtures (like R-12/R-114 mixtures).

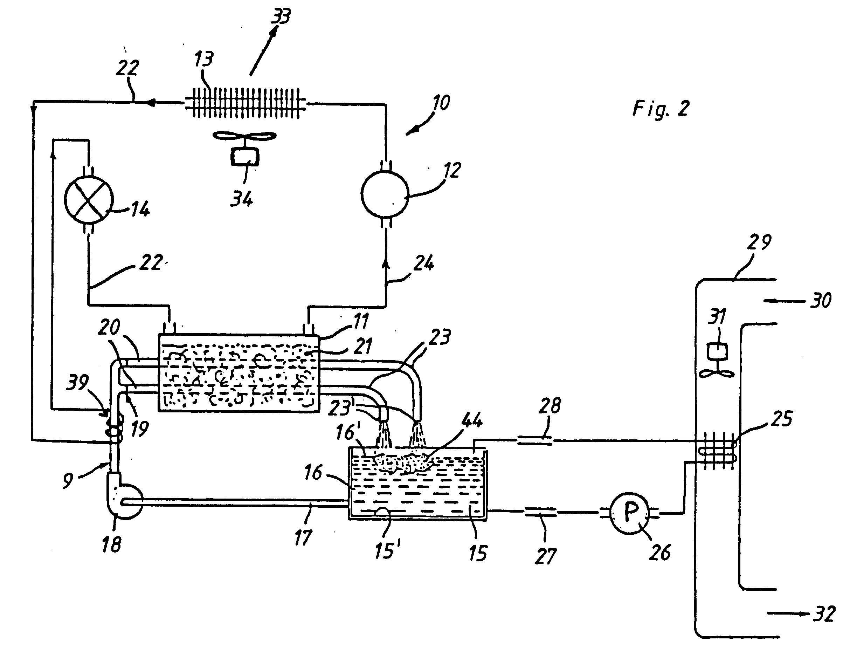

Water arriving at inlet 19 of evaporator 11 must be completely free of ice crystals. That can be done by filtering water with fine mesh screen before said water leaves reservoir 15 through outlet 17. An extra-heat exchanger 39 (figure 2) could also be added for that purpose which would pick up heat from hot refrigerant conduit between the condenser 13 and the expansion device 14 and deliver the heat to the water in conduit means 9.

The evaporator conduit 20 has an arcuate outlet section 23 having discharge ends 23′ disposed above the water lever 16′ of the reservoir 15. The water passing through the evaporator conduit 20 is eventually supercooled by the evaporator 11 and released in the water in the reservoir 15. Upon hitting the surface 16′ of the water in the reservoir 15, some of the supercooled water will solidify and form ice crystals 44.

That ice 44 can be fabricated at night, during off peak hours, and also during day time if needed. The energy picked up by the refrigerant 21 in the evaporator 11 plus the outside energy given to the compressor 12 are released to an outside heat sink 33 which can be,for example, the atmosphere (figures 1 and 2). The heat transfer rate to the heat sink 33 can be increased by using a fan 34.

The reservoir 15 is also connected to a water-to-air heat exchanger 25 located inside an air conduit 29 of the building to be air-conditioned. During day time, the cold water at the bottom of the reservoir 15 is circulated by a pump 26 , via the outlet pipe 27, to the heat exchanger 25 and back into the reservoir through an inlet conduit 28. The warm air 30 inside the building enters the conduit 29, sucked by a fan 31, goes through the heat exchanger 25 and comes out as cool air 32 which is sent back to the space to be conditioned. Water from the outlet conduit 28, having absorbed heat in exchanger 25 from warm air 30, is at a temperature above 0° C so that ice 44 will slowly melt during day time. New ice 44 can then be fabricated during the following night.

In such a system, the fact that the water arriving at the heat exchanger 25 is at a temperature of $0°C$ is important. This permits, for example, a significant reduction in area for the heat exchanger 25, and consequently a large reduction in price of that expensive part, common to all air-conditioning systems.

2. Solar assisted ice-maker heat pump systems

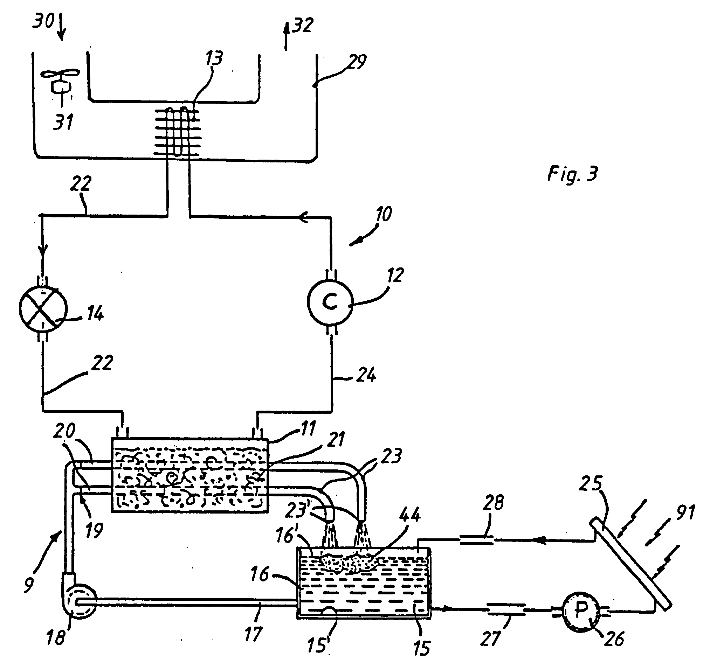

Referring to figure 3, there is shown a schematic diagram of another of the systems covered by the present invention, as utilized again with a mechanical vapor compression heat pump device. The heat pump is used as part of a space heating system and is illustrated by the heat exchange circuit 10 comprising an evaporator 11, a compressor 12, a condenser 13 and an expansion device 14.

The condensor 13 will normally be located in a pulsed air conduit 29. Cool air 30 arriving from the space that needs heating is circulated by a fan 31 through the hot condenser 13. The air 32 leaving the duct 29 is warm and can keep the space comfortable.

The reservoir and the evaporator serve the same purpose as in the first application described above and can thus be built the same way. But in this particular application, the ice 44 fabricated by the heat pump device will have to be melted, unless some use is found for it. It can be melted by circulating the water 16 in the reservoir 15 through a solar collector 25 using a pump 26. When present, sun rays 91 will heat up water flowing through the conduit 27. The water in the return conduit 28 will thus be at a higher temperature and be able to melt the ice 44. The fact, that water in the conduit 27 is at or near $0°C$ makes the solar collector 25 very efficient.

In areas where the sun is not present very often, but where the outside air temperature during the day is normally above $0°C$, the solar collector can be replaced with a simple water to air hear exchanger, helped or not by an air circulating fan.

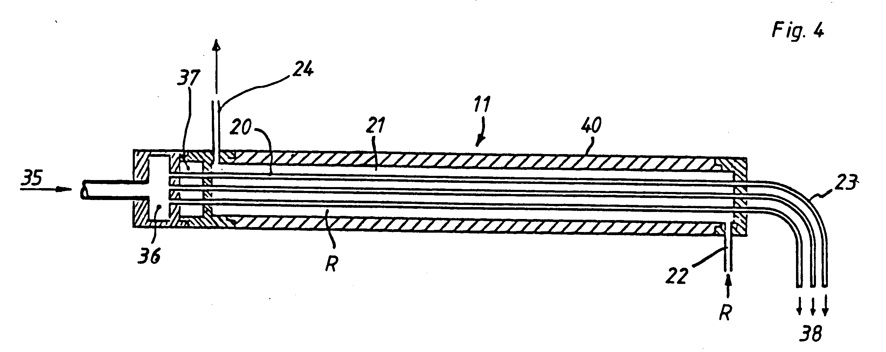

Referring now to figure 4, there is shown an example of construction of the cold side heat exchanger 11 of the invention. As herein shown, the evaporater 11 is comprised of an elongated cylindrical tube 40 containing the refrigerant fluid therein. A plurality of inner tubes 20 extend through the interior of the tube 40 and are in contact with the refrigerant fluid therein. Liquid refrigerant enters the conduit 40 through the inlet tube 22 and evaporated refrigerant leaves through the tube 24. Water 35 arriving from reservoir at a temperature of $0°C$ or above enters a tranquilisation chamber 36 before entering the tubes 20 where the water is to be cooled. An air chamber 37 isolates thermally the almost stagnant water in chamber 36 from the cold refrigerant 21 (also designated R) in order to prevent freezing of the water in the chamber 36. The supercooled water 38 exists from the outlet end 23′ of the tubes 23 which are disposed in an arcuate shape whereby not to disturb the flow of the relatively unstable supercooled water 38.

In one of the models constructed and successfully tested, the interior diameter of the tubes 20 was 3 mm , the length of the tubes 20 exposed to the refrigerant 21 was 2000 mm and the outlet temperature of the supercooled water 38 was about $-3°C$. Excellent heat pump performance was obtained.

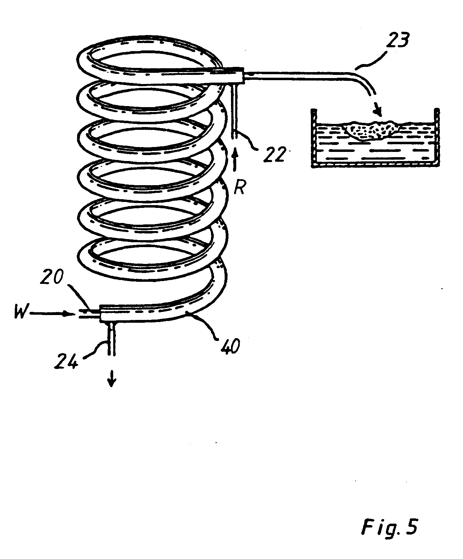

The evaporator 11 shown in figure 5 is of a different configuration and is provided simply to illustrate that instead of a plurality of tubes 20, it is possible to utilize a single larger tube 20 but having a longer span within the outer tube 40 which would herein be formed as a coil. The arcuate dispostion of such a tube 20 would ensure undisturbed flow of the supercooled liquid therein and thus prevent freeze-up.

The refrigerant flow in evaporator 11 can be in the same direction as the water flow. It can also be in the opposite direction, like in the cases of figures 4 and 5.

Other configurations of evaporators 11 are possible. The flooded type, which is frequently used in the refrigeration industry, is an example. The liquid overfed type is another example.

The chemical heat pumps, on which a lot of research is being done at the moment, might feature types of cold side heat exchangers that are quite different from anything that exists today. Like, for example, solid/liquid cold side heat exchangers. If they are used to fabricate supercooled water, they will be within the range of the present invention.

3. Other possible applications of the invention.

The invention can be used effectively as an Annual Cycle Energy System (ACES), in which the ice fabricated during the cold season for heating purposes is stockpiled in large reservoirs for later use for air-conditioning purposes during the warmer season.

That invention can also be used instead of conventional water source heat pumps for heating buildings in winter. One of the disadvantages of those presently on the market, is the fact that they cannot function safely with water below 5 or $6°C$ because of the possibility of ice-up and damage to the low side heat exchanger. With the invention, any river or lake with liquid water can become a source of heat, no matter the temperature of the water.

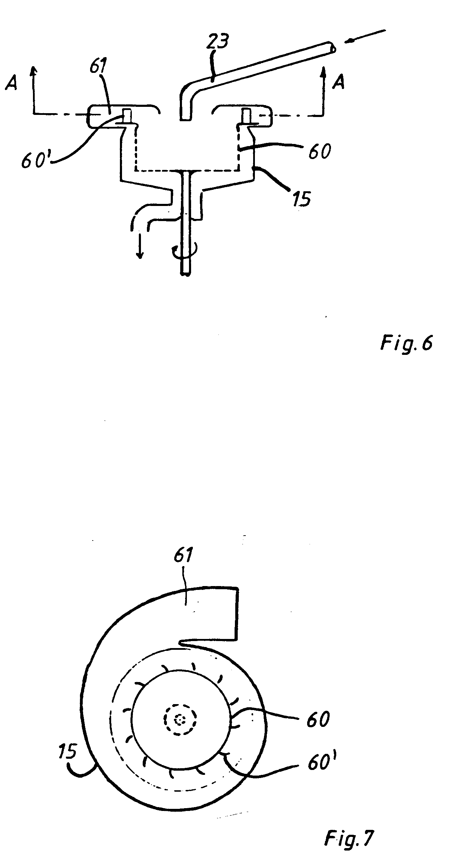

Another important application of the invention is to use the heat pump system to desalinate ocean water. The small ice crystals fabricated with the invention are of pure solid water, even when made from polluted or salted liquid water. Salt water can be fed to the reservoir 15 and the ice 44 removed by a suitable separation and collecting means. As shown in figures 6 and 7 such collection system could consist of a rotating drum 60 made of fine mesh screen installed in the reservoir 15 with a portion 60' of the drum extending above the water surface 16' thus transferring the floating ice to an external conveyor 61. Centrifugation of the ice crystals could complete the liquid/solid separation.

The ice crystals formed with the supercooled water may also be utilized for other applications. For example, this "soft-ice" is ideal for packaging and preserving fish. The crushed ice used at the moment in fishing boats has sharp cutting edges which damage the fish and reduce its quality. The soft-ice is also ideal for the preservation of certain vegetables.

Furthermore the ice could be used for making "slush" drinks, as is popular with children, by adding flavour to the slush ice.

Another use for such soft ice is in the emergency rooms of hospitals where the ice could be used to treat skin burns or placed on broken limbs.

It is within the ambit of the present invention to cover any obvious modifications of the preferred embodiments described herein, provided such modifications fall within the scope of the appended claims.

**Claims**

1. A method for extracting heat from cold water by feeding cold water (16) continuously to a heat pump provided with a cold side heat exchanger CSHE (11) in which heat is extracted from the cold water, and a hot side heat exchanger HSHE (13) in which said extracted heat is used or disposed off, characterized by
   - supercooling the cold water (16) to temperatures below 0° C on a continuous basis in the CSHE (11) by passing the cold water (16) through at least one tube (20) of the CSHE (11) having such a small internal diameter as compared to its length that it is capable of supercooling water passing therethrough, thereby allowing maximum heat extraction from the cold water (16),
   - bringing the supercooled water in a quasi-stable liquid state within a CSHE (11) through proper conduit means from the CSHE (11) to a reservoir (15) and subjecting it to a change of state when it leaves the conduit means, thereby generating a mixture of ice crystals and water in the reservoir (15).

2. The method according to claim 1, in which the cold water (16) fed to the CSHE (11) is pumped from the reservoir (15) by means of a pump (18) mounted in an outlet conduit (17) connected to a lower portion of said reservoir, said outlet conduit (17) being connected to the inlet (19) of a water conduit (20) passing through said CSHE (11) and leading to said reservoir (15).

3. The method according to claim 1 or 2, in which the supercooled water is subjected to said change of state by releasing it above the water level in the reservoir (15) and thus causing it to hit said water level or by contacting it with an object extending across its path.

4. The method according to claim 1 or 2, in which water is subjected to said change of state by contacting it with ice in the form of blocks and crystals.

5. The method according to any of claims 1 to 4, in which said heat pump makes use of a refrigerant that is successively vaporized and condensed and comprises a compressor (12) and an expansion device (14) positioned between the hot side heat exchanger HSHE (13) of said heat pump and its CSHE (11) whereby said heat pump forms a mechanical vapor compression system capable of supercooling said water.

6. The method according to any of claims 1 to 4, in which said CSHE (11) and HSHE (13) are part of an absorption heat pump capable of supercooling said water.

7. The method according to any of claims 1 to 4, in which said CSHE (11) and HSHE (13) are part of a chemical heat pump capable of supercooling said water.

8. The method according to any previous claims in which said supercooling is achieved by passing said water (10) through a plurality of straight tubes (20) extending inside said CSHE (11), whereby said water (10) is cooled by indirect thermal contact with the cold medium in said CSHE (11).

9. The method according to any of claims 1 to 7, in which said supercooling is achieved by passing said water (10) through a plurality of smoothly curved tubes (20) extending inside said CSHE (11), whereby said water is cooled by indirect thermal contact with the cold medium in said CSHE (11).

10. The method according to claim 8 or 9, in which said water is distributed evenly to each of said tubes (20) in said CSHE (11), said distribution being performed in a tranquilization chamber (36) located upstream of said CSHE (11).

11. The method according to claim 10, in which said tranquilization chamber (36) and said CSHE (11) are thermally isolated from one another in order to prevent freezing of the slowly flowing water in said tranquilization chamber (36).

12. The method according to any of claims 1 to 7, in which said CSHE (11) comprises a coiled tubular cold medium chamber (40), and in which said supercooling is achieved by passing said water (10) through a tube (20) disposed concentrically within said cold medium chamber (40).

13. The method according to any of claims 1 to 12, in which the water (16) flowing through said water conduit means comes from the reservoir (15) in which ice crystals are prevented from entering said CSHE (11) together with the flow of water from the reservoir by heating said water slightly above 0°C before it enters said CSHE (11), said heating being performed by a heat exchanger (39) able to transfer heat from any convient source of heat like hot working medium in said HSHE (13), said heat being sufficient to melt any ice crystals contained in said water (16).

14. The method according to any of claims 1 to 13, comprising the additional steps of separating and collecting ice crystals from said reservoir (15) and transporting said ice crystals to a convenient location.

15. The method according to claim 14 in which said separation and collection is carried out with a screen, said screen being located above the liquid level of said reservoir (15), said supercooled water flowing as jets hitting said screen, said screen then acting as said object extending acrosss the path of said water to cause said change of state, said screen also acting as a liquid/solid separator, the liquid water being able to drain through and/or around screen into said reservoir (15).

16. The method according to claim 14 in which said separation and collection is carried out with a centrifugal drive (figures 6 and 7) located above the liquid level (16) of said reservoir (15).

17. The method according to any of the claims 1 to 16, wherein said water (16) in said reservoir (15) is salt water and in which said method comprises the additional step of recovering by separation and collection the ice being formed in the form of ice crystals free of salt content, whereby said heat pump, said salt water supply circuit and said ice separation and colleting means act as a water desalination system.

18. The method according to any of claims 1 to 16 wherein said water (16) in said reservoir (15) is polluted water and in which said method comprises the additional steps of recovering by separation and collection the ice being formed in the form of ice crystals free of pollutants, whereby said heat pump, said polluted water supply circuit and said ice separation and collecting means act as as water depollution system.

19. The method according to any of claims 1 to 16, in which ice crystals that are formed are molten in a heat exchanger to produce purified water, heat in said heat exchanger coming from any convenient source of heat, including heat from warm air in a building, the method then allowing air conditioning/water purification.

20. The method according to any of claims 1 to 16, wherein use is made of said HSHE (13) to heat any fluid, including air, as part of a space heating system, an ice slurry being formed and accumulated during operation of said heat pumps in in which said reservoir (15) is connected to an auxiliary heat exchanger (25) capable of warming said water and melt ice crystals in said reservoir (15) so as to prevent freeze-up of the entire volume of said water in said reservoir, said auxiliary heat exchanger being a solar collector system having control means to control collection of solar heat (91).

21. The method according to any of claims 1 to 12, wherein use is made of said HSHE (13) to heat any fluid, including air, as part of a space heating system, ice slurry being formed and accumulated in said reservoir (15) during operation of said heat pump, said reservoir being replenished with water from a large body of water such as a lake or a river if and when necessary.

22. The method according to claim 21, wherein said large body of water acts as said reservoir (15) and in which water fed to the CSHE (11) is thus taken directly from said large body of water via said pump and water conduit and subsequently returned directly to said large body of water via said water conduit.

23. The method according to any of claims 2 to 13, in which said reservoir (15) is connected to an ice slurry circulation circuit comprising pump and conduit means capable of feeding said ice slurry to an end user for different uses in the food industry, in the construction industry and elsewhere, said ice slurry reservoir being replenished with proper makeup water if and when necessary.

24. The method according to any of claims 1 to 13, in which the ice slurry being formed and accumulated in said reservoir (15) during operation of said heat pump is circulated in one or-more auxiliary heat exchangers (25), the system then being capable of cooling any fluid, including air (30) as part of a cooling system, for example a building or a district cooling system.

25. The method according to claim 21 or 22, wherein the water taken from said large body of water may be polluted or salted water.

26. The method according to any of claims 1 to 25, wherein the tube(s) (20) in and downstream the CSHE (11) as well as the conduit means leading to the reservoir (15) are straight or smoothly curved to ensure undisturbed flow of the supercooled water formed and circulated therein, and thus prevent freeze-up.

**Revendications**

1. Une méthode pour extraire de la chaleur d'une eau froide en alimentant en eau froide (16) de façon continue une pompe à chaleur munie d'un échangeur de chaleur côté froid ECCF (11) dans lequel la chaleur est extraite de l'eau froide, et d'un échangeur de chaleur côté chaud ECCC (13) dans lequel ladite chaleur extraite est utilisée ou rejetée, caractérisée par le fait que

- l'on sur-refroidit l'eau froide (16) de façon continue jusqu'à des températures sous 0˚C dans l'ECCF (11) en faisant passer l'eau froide (16) à travers au moins un tube (20) de l'ECCF (11) ayant un si petit diamètre par rapport à sa longueur qu'il est capable de sur-refroidir l'eau qui y passe, permettant ainsi une extraction maximum de chaleur à partir de l'eau froide (16),
- l'on amène au moyen de conduites appropriées (23) l'eau sur-refroidie à l'état liquide quasi-stable à l'intérieur de l'ECCF (11) jusqu'à un réservoir (15) et on lui fait subir un changement d'état, lorsqu'elle sort des conduites, pour ainsi produire dans le réservoir (15) un mélange de cristaux de glace et d'eau liquide.

2. La méthode selon la revendication 1, dans laquelle l'eau froide (16) envoyée à l'ECCF (11) est pompée à partir du réservoir (15) au moyen d'une pompe (18) installée le long d'une conduite de sortie (17) branchée à une partie basse dudit réservoir (15), ladite conduite de sortie (17) étant branchée à l'entrée (19) d'une conduite d'eau (20) passant à travers ledit EVAP (11) et allant jusqu'audit réservoir (15).

3. La méthode selon la revendication 1 ou 2, dans laquelle l'eau sur-refroidie est soumise audit changement d'état en la relachant au dessus du niveau d'eau dans le réservoir (15) et en l'amenant ainsi frapper ledit niveau d'eau ou encore à toucher un objet situé dans son trajet.

4. La méthode selon la revendication 1 ou 2, dans laquelle l'eau sur-refroidie est soumise audit changement d'état en lui faisant toucher de la glace sous forme de blocs et de cristaux.

5. La méthode selon une quelconque des revendications 1 à 4, dans laquelle ladite pompe à chaleur utilise un réfrigérant qui est successivement vaporisé et condensé et comprend un compresseur (12) et un dispositif d'expansion (14) placé entre l'échangeur de chaleur côté chaud ECCC (13) de ladite pompe à chaleur et son ECCF (11), de telle sorte que ladite pompe à chaleur forme un système mécanique à compression de vapeur capable de sur-refoirdir ladite eau.

6. La méthode selon une quelconque des revendications 1 à 4, dans laquelle lesdits ECCF (11) et ECCC (13) font partie d'une pompe à chaleur à absorption capable de sur-refroidir cette eau.

**7.** La méthode selon une quelconque des revendications 1 à 4, dans laquelle lesdits ECCF (11) et ECCC (13) font partie d'une pompe à chaleur chimique capable de sur-refroidir cette eau.

**8.** La méthode selon une quelconque des revendications précédentes, dans laquelle ledit sur-refroidissement est obtenu en faisant passer ladite eau (16) dans une pluralité de tubes droits (20) installés dans ledit ECCF (11), de telle sorte que ladite eau (16) est refroidie par contact thermique indirect avec le milieu froid dans ledit ECCF (11).

**9.** La méthode selon une quelconque des revendications 1 à 7, dans laquelle ledit sur-refroidissement est obtenu en faisant passer ladite eau (16) dans une pluralité de tubes courbés de façon régulière (20) s'étendant dans ledit ECCF (11), de telle sorte que ladite eau (16) est refroidie par contact thermique indirect avec le milieu froid dans ledit ECCF (11).

**10.** La méthode selon la revendication 8 ou 9, dans laquelle ladite eau est distribuée uniformément à chacun desdits tubes (20) dans ledit ECCF (11), ladite distribution étant effectuée dans une chambre de tranquillisation (36) située en amont dudit ECCF (11).

**11.** La méthode selon la revendication 10, dans laquelle ladite chambre de tranquillisation (36) et ledit EVAP (11) sont isolés thermiquement l'un de l'autre de façon à prévenir le gel de l'eau s'écoulant lentement dans ladite chambre de tranquillisation (36).

**12.** La méthode selon une quelconque des revendications 1 à 7, dans laquelle ledit ECCF (11) comprend une chambre tubulaire en spirale (40) pour le milieu froid, et dans laquelle ledit sur-refroidissement est obtenu en faisant passer ladite eau (16) dans un tube (20) disposé de façon concentrique dans ladite chambre (40).

**13.** La méthode selon une quelconque des revendications 1 à 12, dans laquelle l'eau (16) s'écoule dans lesdites conduites d'eau venant du réservoir (15) et dans laquelle on empêche les cristaux de glace d'entrer dans ledit ECCF (11) en même temps que l'eau venant du réservoir (15) en chauffant ladite eau légèrement au dessus de 0°C avant qu'elle n'entre dans ledit EVAP (11), ledit chauffage étant effectué par un échangeur de chaleur (39) capable de transférer la chaleur venant de n'importe quelle source de chaleur commode, comme par exemple le milieu chaud dudit ECCF (13), ladite chaleur étant suffisante pour faire fondre les cristaux de glace pouvant se trouver dans l'eau (16).

**14.** La méthode selon une quelconque des revendications 1 à 13, comprenant les étapes additionnelles de séparation et de collecte des cristaux de glace dudit réservoir (15) et de transport desdits cristaux de glace à un endroit commode.

**15.** La méthode selon la revendication 14, dans laquelle ladite séparation et ladite collecte sont réalisées au moyen d'un tamis, ledit tamis étant installé au dessus du niveau du liquide dudit réservoir (15), ladite eau sur-refroidie s'écoutant sous forme de jets frappant ledit tamis, ledit tamis agissant alors comme ledit objet situé dans le trajet de ladite eau de façon à produire ledit changement d'état, ledit tamis agissant aussi comme séparateur liquide-solide, l'eau liquide pouvant s'écouler à travers et/ou autour du tamis jusque dans ledit réservoir (15).

**16.** La méthode selon la revendication 14, dans laquelle ladite séparation et ladite collecte sont réalisées au moyen d'un mécanisme centrifuge (figures 6 et 7) placé au dessus du niveau de liquide (16) dudit réservoir (15).

**17.** La méthode selon une quelconque des revendications 1 à 16, dans laquelle ladite eau (16) dudit réservoir (15) est de l'eau salée, et dans laquelle ladite méthode comprend l'étape additionnelle de récupération par séparation et collecte de la glace formée sous la forme de cristaux de glace exempts de sel, de telle sorte que ladite pompe à chaleur, ledit circuit d'amenée d'eau salée et lesdits mécanismes de séparation et de collecte agissent comme un système de désalination de l'eau.

**18.** La méthode selon une quelconque des revendications 1 à 16, dans laquelle ladite eau (16) dudit réservoir (15) est de l'eau polluée et dans laquelle ladite méthode comprend les étapes additionnelles de récupération par séparation et collecte de la glace formée sous la forme de cristaux de glace exempts de polluants, de telle sorte que ladite pompe à chaleur, ledit circuit d'amenée d'eau polluée et lesdits mécanismes de séparation et de collecte agissent comme un système de dépollution de l'eau.

**19.** La méthode selon une quelconque des revendications 1 à 16, dans laquelle les cristaux de glace qui sont formés sont fondus dans un échangeur de chaleur, pour produire de l'eau purifiée, la chaleur dans ledit échangeur provenant de n'importe quelle source de chaleur commode, incluant la chaleur venant de l'air chaud d'un bâtiment, la méthode rendant alors possible une climatisation et purification d'eau.

**20.** La méthode selon une quelconque des revendications 1 à 16, dans laquelle on utilise ledit ECCC (13) pour chauffer un fluide quelconque y compris de l'air, à l'intérieur d'un système de chauffage d'espace, de la purée de glace étant générée et accumulée durant l'opération de ladite pompe à chaleur, ledit réservoir étant branché à un échangeur de chaleur auxilliaire (25) capable de chauffer ladite eau et de faire fondre lesdits cristaux de glace dans ledit réservoir (15) de façon à empêcher le gel de la totalité du volume de ladite eau dans ledit réservoir, ledit échangeur de chaleur étant un capteur solaire muni d'un moyen de contrôle pour contrôler le captage de l'énergie solaire (91).

**21.** La méthode selon une quelconque des revendications 1 à 12, dans laquelle on utilise ledit ECCC (13) pour chauffer n'importe quel fluide, incluant de l'air, ledit ECCC (13) faisant alors une composante d'un système de chauffage d'espace, de la purée de glace étant générée et accumulée dans ledit réservoir (14) durant l'opération de ladite pompe à chaleur, ledit réservoir étant réapprovisionné en eau, si et quand c'est nécessaire, à partir d'une grande étendue d'eau quelconque, comme un lac ou une rivière.

**22.** La méthode selon la revendication 21, dans laquelle ladite grande étendue d'eau remplace ledit réservoir (15) et dans laquelle l'eau fournie au ECCC (11) est donc prise directement dans ladite grande étendue d'eau au moyen de ladite pompe et de ladite conduite d'eau, et ensuite retournée directement à ladite grande étendue d'eau via ladite conduite d'eau.

**23.** La méthode selon une quelconque des revendications 1 à 13, dans laquelle ledit réservoir (15) est branché à un circuit de circulation de purée de glace comprenant une pompe et des conduits, ledit circuit étant capable de fournir ladite purée de glace à un utilisateur pour différentes utilisations dans les industries de l'alimentation, de la construction et ailleurs, ledit réservoir de purée de glace étant réapprovisionné en eau d'ajout si et quand nécessaire.

**24.** La méthode selon une quelconque des revendications 1 à 13, dans laquelle la purée de glace formée et accumulée dans ledit réservoir (15) durant l'opération de ladite pompe à chaleur est circulée dans un ou plusieurs échangeurs de chaleur auxilliaires (25), le système étant alors capable de refroidir n'importe quel fluide, incluant de l'air (30), comme composante d'un système de refroidissement pour un bâtiment ou un ensemble de bâtiments.

**25.** La méthode selon la revendication 21 ou 22, dans laquelle l'eau venant de ladite grande étendue d'eau est de l'eau salée ou de l'eau polluée.

**26.** La méthode selon une quelconque des revendications 1 à 25, dans laquelle le(s) tube(s) (20) dans et en aval de l'ECCF (11) ainsi que les conduites allant vers le réservoir (15) sont droites ou courbées de façon régulière afin d'y assurer un écoulement sans perturbation pour l'eau sur-refroidie qui y est formée et circulée, et ainsi y prévient le gel.

**Patentansprüche**

**1.** Ein Verfahren zum Herausziehen von Wärme aus kaltem Wasser durch fortwährendes Einspeisen von kaltem Wasser (16) in eine Wärmepumpe, die mit einem Wärmetauscher auf der kalten Seite WTKS, in dem dem kalten Wasser Wärme entzogen wird, und einem Wärmetauscher auf der warmen Seite WTWS (13) versehen ist, in dem die entzogene Wärme benutzt oder abgeführt wird,
**gekennzeichnet** durch
- dauerndes Überkühlen des kalten Wassers (16) auf Temperaturen unter $0\,^{\circ}$C in dem WTKS (11) durch Hindurchführen des kalten Wassers (16) durch mindestens ein Rohr (20) des WTKS (11), das einen derartig kleinen inneren Durchmesser im Vergleich zu seiner Länge hat, daß es in der Lage ist, überkühltes Wasser hindurchzuleiten, wodurch ein maximaler Wärmeentzug aus dem kalten Wasser (16) gestattet wird,
- Überleiten des überkühlten Wassers in einem quasistabilen, flüssigen Zustand in einem WTKS (11) durch geeignete Leitungsmittel hindurch von dem WTKS (11) zu einem Reservoir (15) und Aussetzen des Wassers einer Zustandsänderung, wenn es die Leitungsmittel verläßt, wodurch eine Mischung von Eiskristallen und Wasser in dem Reservoir (15) erzeugt wird.

2. Das Verfahren nach Anspruch 1, bei dem das kalte Wasser (16), das dem WTKS (11) zugeführt wird, aus dem Reservoir (15) mit Hilfe einer an einer Auslaßleitung (17) angebrachten Pumpe (18) gepumpt wird, wobei die Auslaßleitung (17) an einem unteren Abschnitt des Reservoirs angebracht ist und an dem Einlaß (19) einer Wasserleitung (20) angeschlossen ist, die durch den WTKS (11) hindurchgeht und zu dem Reservoir (15) führt.

3. Das Verfahren nach Anspruch 1 oder 2, bei dem das überkühlte Wasser dadurch der Zustandsänderung unterworfen wird, daß es über dem Wasserspiegel in dem Reservoir (15) freigegeben wird und so zwangsläufig auf dem Wasserspiegel aufschlägt, oder daß es mit einem Gegenstand in Kontakt gebracht wird, der sich in seinem Stromweg befindet.

4. Das Verfahren nach Anspruch 1 oder 2, bei dem Wasser der Zustandsänderung dadurch unterworfen wird, daß es mit Eis in der Form von Blöcken oder Kristallen in Kontakt gebracht wird.

5. Das Verfahren nach einem der Ansprüche 1 bis 4, bei dem die Wärmepumpe von einem Kühlmittel Gebrauch macht, das nacheinander verdampft und kondensiert wird, sowie einen Kompressor (12) und ein zwischen dem Wärmetauscher auf der heißen Seite WTHS (13) der Wärmepumpe und seinem WTKS (11) angebrachtes Expansionsteil aufweist, wodurch die Wärmepumpe ein mechanisches Dampfkompressionssystem bildet, das in der Lage ist, das Wasser zu überkühlen.

6. Das Verfahren nach einem der Ansprüche 1 bis 4, in dem der WTKS (11) und der WTHS (13) Teil einer Absorptionswärmepumpe sind, die in der Lage ist, das Wasser zu überkühlen.

7. Das Verfahren nach einem der Ansprüche 1 bis 4, bei dem der WTKS (11) und der WTHS (13) Teil einer chemischen Wärmepumpe sind, die in der Lage ist, das Wasser zu überkühlen.

8. Das Verfahren nach einem der vorhergehenden Ansprüche, bei dem das Überkühlen durch Hindurchleiten des Wassers (10) durch eine Vielzahl von geraden Rohren (20) erreicht wird, die sich innerhalb des WTKS (11) erstrecken, wodurch das Wasser infolge eines indirekten thermischen Kontaktes mit dem kalten Medium in dem WTKS (11) gekühlt wird.

9. Das Verfahren nach einem der Ansprüche 1 bis 7, bei dem das Überkühlen durch Hindurchleiten des Wassers (10) durch eine Mehrzahl von leicht gekrümmten Rohren (20) erreicht wird, die sich innerhalb des WTKS (11) erstrecken, wodurch das Wasser infolge eines indirekten, thermischen Kontaktes mit dem kalten Medium in dem WTKS (11) gekühlt wird.

10. Das Verfahren nach Anspruch 8 oder 9, bei dem das Wasser gleichmäßig über die Rohre (20) in dem WTKS (11) verteilt wird, wobei die Verteilung in einer Beruhigungskammer (36) durchgeführt wird, die auf der Zustromseite des WTKS (11) angeordnet ist.

11. Das Verfahren nach Anspruch 10, bei dem die Beruhigungskammer (36) und der WTKS (11) thermisch voneinander isoliert sind, um das Einfrieren des langsam fließenden Wassers in der Beruhigungskammer (36) zu verhindern.

12. Das Verfahren nach einem der Ansprüche 1 bis 7, bei dem der WTKS (11) eine Kammer (40) für das kalte Medium in Form eines gewickelten Rohres umfaßt, und bei dem das Überkühlen durch Hindurchleiten des Wassers (10) durch ein Rohr (20) erreicht wird, das konzentrisch in der Kammer (40) für das kalte Medium angeordnet ist.

13. Das Verfahren nach einem der Ansprüche 1 bis 12, bei dem das durch die Wasserleitungsmittel hindurchfließende Wasser (16) von dem Reservoir (15) kommt, in dem Eiskristalle am Eintritt in den WTKS (11) zusammen mit dem Wasserstrom aus dem Reservoir durch Erwärmen des Wassers auf etwas über 0°C gehindert werden, bevor es in den WTKS (11) eintritt, wobei das Erwärmen mit Hilfe eines Wärmetauschers (39) erfolgt, der in der Lage ist, Wärme von jeder geeigneten Wärmequelle wie z.B. eines erwärmten Arbeitsmediums in dem WTWS (13) zu übertragen und die Wärme ausreicht, um irgendwelche Eiskristalle zu schmelzen, die sich in dem Wasser (16) befinden.

14. Das Verfahren nach einem der Ansprüche 1 bis 13, das die zusätzlichen Schritte des Trennens und Auffangens von Eiskristallen aus dem Reservoir (15) und den Transport der Eiskristalle zu einer geeigneten Stelle umfaßt.

**15.** Das Verfahren nach Anspruch 14, bei dem die Trennung und das Auffangen mit Hilfe eines Siebes erfolgt, das oberhalb des Wasserspiegels des Reservoirs (15) angeordnet ist, wobei das überkühlte Wasser das Sieb in Strahlen trifft, das dann als der Gegenstand dient, der sich in dem Strompfad des Wassers befindet, um die Zustandsänderung herbeizuführen, und ebenso als Flüssig/ Fest-Seperator dient, wobei das flüssige Wasser durch oder um das Sieb in das Reservoir (15) fließen kann.

**16.** Das Verfahren nach Anspruch 14, bei dem die Trennung und das Auffangen mit Hilfe eines Zentrifugalantriebes (Figuren 6 und 7) oberhalb des Flüssigkeitsspiegels (16) des Reservoirs (15) erfolgt.

**17.** Das Verfahren nach einem der Ansprüche 1 bis 16, bei das Wasser (16) in dem Reservoir (15) Salzwasser ist und bei dem das Verfahren die zusätzlichen Schritte der Wiedergewinnung durch Trennung und Auffangen des Eises umfaßt, das sich in Form von Eiskristallen ohne Salzgehalt bildet, wodurch die Wärmepumpe, der Salzwasserzuführkreislauf und die Eistrennungs- und Ansammlungsmittel als ein Wasserentsalzungssystem arbeiten.

**18.** Das Verfahren nach einem der Ansprüche 1 bis 16, bei dem das Wasser (16) in dem Reservoir (15) verunreinigtes Wasser ist und bei dem das Verfahren die zusätzlichen Schritte der Wiedergewinnung durch Trennung und Ansammlung des Eises umfaßt, das in Form von Eiskristallen frei von Verunreinigungen entsteht, wobei die Wärmepumpe, der Zuführkreislauf für das verunreinigte Wasser und die Eistrennungs- und Ansammlungsmittel als ein Wasserreinigungssystem arbeiten.

**19.** Das Verfahren nach einem der Ansprüche 1 bis 16, bei dem entstehende Eiskristalle in dem Wärmetauscher geschmolzen werden, um gereinigtes Wasser zu erzeugen, wobei die Wärme in dem Wärmetauscher von irgendeiner geeigneten Wärmequelle kommt, einschl. der Wärme von Warmluft in einem Gebäude, wobei dann das Verfahren eine Klimatisierung/Wasserreinigung erlaubt.

**20.** Das Verfahren nach einem der Ansprüche 1 bis 16, bei dem der WTHS (13) zur Erwärmung irgendeines Fluids, einschl. Luft, benutzt wird als Teil eines Raumheizsystems, wobei während des Betriebes der Wärmepumpe ein Eis-Wasser-Gemisch gebildet und angesammelt wird, bei der das Reservoir (15) an einen Hilfswärmetauscher (25) angeschlossen ist, der in der Lage ist, das Wasser zu erwärmen und Eiskristalle in dem Reservoir (15) zu schmelzen, um das Auffrieren des gesamten Volumens des Wassers in dem Reservoir zu verhindern, wobei der Hilfswärmetauscher ein Sonnenkollektorsystem ist, das Steuermittel aufweist, um das Einfangen von Sonnenwärme (91) zu steuern.

**21.** Das Verfahren nach einem der Ansprüche 1 bis 12, bei dem der WTHS (13) zur Erwärmung eines Fluids einschl. Luft als Teil eines Raumheizsystems benutzt wird, wobei während des Betriebes der Wärmepumpe ein Eis-Wasser-Gemisch geformt und in dem Reservoir angehäuft wird, wobei das Reservoir ggfs. mit Wasser aus einem großen Wasservorrat wie einem See oder einem Fluß aufgefüllt wird.

**22.** Das Verfahren nach Anspruch 21, bei dem der große Wasservorrat als Reservoir (15) dient und bei dem zu dem WTKS (11) geführtes Wasser folglich direkt aus dem großen Wasservorrat über die Pumpe und die Wasserleitung entnommen und anschließend direkt zu dem großen Wasservorrat über die Wasserleitung zurückgeführt wird.

**23.** Das Verfahren nach einem der Ansprüche 2 bis 13, bei dem das Reservoir (15) mit einem Kreislauf für den Umlauf von einem Eis-Wasser-Gemisch verbunden ist, der Pumpen- und Leitungsmittel umfaßt, die in der Lage sind, das Eis-Wasser-Gemisch zu einem Endverbraucher für verschiedene Zwecke in der Nahrungsmittelindustrie, in der Bauindustrie oder sonstwo zu fördern, wobei das Reservoir für das Eis-Wasser-Gemisch ggf. mit ordentlichem, aufgearbeitetem Wasser aufgefüllt wird.

**24.** Das Verfahren nach einem der Ansprüche 1 bis 13, bei dem das in dem Reservoir (15) während des Betriebes der Wärmepumpe gebildete und gesammelte Eis-Wasser-Gemisch in einem oder mehreren Hilfswärmetauschern (25) zirkuliert wird, wobei das System dann in der Lage ist, jegliches Fluid, einschl. Luft (30) als Teil eines Kühlsystems zu kühlen, z.B. eines Gebäude- oder Häuserblockkühlsystems.

**25.** Das Verfahren nach Anspruch 21 oder 22, bei dem das Wasser, das aus dem großen Wasservorrat genommen wird, verunreinigtes oder salziges Wasser sein kann.

**26.** Das Verfahren nach einem der Ansprüche 1 bis 25, bei dem das Rohr bzw. die Rohre (20) in bzw. auf der Abströmseite des WTKS (11) sowie die Leitungsmittel, die zu dem Reservoir (15) führen, gerade oder schwach gekrümmt geformt sind, um einen ungestörten Fluß des überkühlten Wassers sicherzustellen, das darin geformt wird und zirkuliert, wodurch das Zufrieren verhindert wird.

Fig. 1

Fig. 2

EP 0 283 528 B1

Fig. 3

EP 0 283 528 B1

16

Fig. 4

EP 0 283 528 B1

Fig. 5

*Fig. 6*

*Fig. 7*